# EUROPÄISCHE PATENTANMELDUNG

(11) **EP 2 228 114 A1**
(43) Veröffentlichungstag der Anmeldung: **15.09.2010**
(21) Anmeldenummer: 10154283.5
(22) Anmeldetag: 22.02.2010
(51) Int. Cl.: B01D 33/048

(54) **Reinigungsanlage**

(30) Priorität: 26.02.2009 DE 102009012100
(71) Anmelder: Index-Werke GmbH & Co. KG Hahn & Tessky, 73730 Esslingen (DE)
(72) Erfinder: Herold, Jörg, 70180, Stuttgart (DE)
(74) Vertreter: Hoeger, Stellrecht & Partner Patentanwälte

(57) **Zusammenfassung**

Um eine Reinigungsanlage für Kühlschmierstoff von Werkzeugmaschinen umfassend ein Anlagengehäuse, eine in dem Anlagengehäuse angeordnete Filtereinrichtung, welcher Kühlschmierstoff über ein Zuführelement zuführbar ist, und eine Auffangwanne, in welcher der durch die Filtereinrichtung hindurchgetretene und dadurch gefilterte Kühlschmierstoff aufgefangen wird, zu schaffen, welcher Kühlschmierstoff mit der vollständigen Schmutzfracht einer Werkzeugmaschine zugeführt werden kann, wird vorgeschlagen, dass die Filtereinrichtung eine Feinfiltereinheit umfasst, welche ein einen Feinfiltertrog bildendes Filterelement aufweist, das durch den Feinfiltertrog hindurchbewegbar ist und dass der Feinfiltereinheit eine Grobfiltereinheit vorgeschaltet ist, welche Späne auffängt und aus welcher die Späne mit einer Spänetransporteinheit abführbar sind.

## Beschreibung

Die Erfindung betrifft eine Reinigungsanlage für Kühlschmierstoff von Werkzeugmaschinen, umfassend ein Anlagengehäuse, eine in dem Anlagegehäuse angeordnete Filtereinrichtung, welcher Kühlschmierstoff über ein Zufuhrelement zuführbar ist, und eine Auffangwanne, in welcher der durch die Filtereinrichtung hindurchgetretene und dadurch gefilterte Kühlschmierstoff aufgefangen wird.

Derartige Reinigungsanlagen sind aus dem Stand der Technik bekannt. Bei diesen besteht das Problem, dass diesen Kühlschmierstoff mit der vollen Schmutzfracht nicht zugeführt werden kann, da dann deren Effizienz nicht mehr gewährleistet wäre.

Der Erfindung liegt daher die Aufgabe zugrunde, eine Reinigungsanlage zu schaffen, welcher Kühlschmierstoff mit der vollständigen Schmutzfracht einer Werkzeugmaschine zugeführt werden kann.

Diese Aufgabe wird bei einer Reinigungsanlage der eingangs beschriebenen Art erfindungsgemäß dadurch gelöst, dass die Filtereinrichtung eine Feinfiltereinheit umfasst, welche ein einen Feinfiltertrog bildendes Filterelement aufweist, das durch den Feinfiltertrog hindurch bewegbar ist und dass der Feinfiltereinheit eine Grobfiltereinheit vorgeschaltet ist, welche Späne auffängt und aus welcher die Späne mit einer Spänetransporteinheit abführbar sind.

Der Vorteil der erfindungsgemäßen Lösung ist darin zu sehen, dass durch das Vorsehen der Grobfiltereinheit die Möglichkeit besteht, aus dem die volle Schmutzfracht einer Werkzeugmaschine mitführenden Kühlschmierstoff zunächst Späne, das heißt insbesondere Grobspäne, auszufiltern und dann den Kühlschmierstoff mit der restlichen Schmutzfracht in der Feinfiltereinheit zu filtern.

Insbesondere schafft die erfindungsgemäße Lösung die Möglichkeit, Grobspäne unabhängig von der übrigen Schmutzfracht aus dem Kühlschmierstoff zu entfernen.

Besonders günstig ist es dabei, wenn die Grobfiltereinheit einen Grobfiltertrog aufweist.

Ferner ist es insbesondere zum kompakten Aufbau der Reinigungsanlage vorteilhaft, wenn der Grobfiltertrog in Schwerkraftrichtung über dem Feinfiltertrog angeordnet ist.

Eine hinsichtlich der Kompaktheit besonders günstige Lösung sieht vor, dass der Grobfiltertrog sich in den Feinfiltertrog hineinerstreckt.

Insbesondere dann, wenn der Feinfiltertrog, gebildet aus einem Abschnitt des Filterelements, endseitig durch Dichtscheiben abdichtet ist eine Lösung, bei welcher der Grobfiltertrog zwischen den Feinfiltertrog endseitig abschließenden Dichtscheiben angeordnet ist. Damit nimmt der Grobfiltertrog nicht mehr Raum ein, als der Raum, der ohnehin durch die Dichtscheiben des Feinfiltertrogs vorgegeben ist.

Hinsichtlich des Filterelements, welches den Grobfiltertrog bildet, wurden bislang keine näheren Angaben gemacht.

Prinzipiell wäre es ebenfalls denkbar, als Filterelement ein biegeschlaffes Material, beispielsweise ein Drahtgeflecht oder ähnliches einzusetzen, welches ähnlich wie bei der Feinfiltereinheit durch Dichtscheiben zu einem Grobfiltertrog geformt ist.

Als besonders vorteilhaft hat es sich jedoch erwiesen, wenn die Grobfiltereinheit ein feststehendes Filterelement umfasst, welches den Grobfiltertrog bildet.

Beispielsweise ist das feststehende Filterelement als Sieb, insbesondere als trogförmig geformtes Siebblech ausgebildet.

Um von dem feststehenden Grobfilterelement effizient die Späne zu entfernen ist vorzugsweise vorgesehen, dass dem feststehenden Filterelement die Spänetransporteinheit zugeordnet ist, welche auf dem Filterelement aufliegende Späne zu einem Spänebehälter fördert.

Diese Spänetransporteinheit kann dabei in unterschiedlichster Art und Weise arbeiten.

Eine Lösung sieht vor, dass die Spänetransporteinheit die Späne von dem Filterelement mechanisch abträgt.

Eine andere vorteilhafte Lösung sieht vor, dass die Spänetransporteinheit die Späne von dem Filterelement durch ein Magnetfeld aufnimmt und abträgt.

Alternativ oder ergänzend zu den bislang beschriebenen Ausführungsformen der erfindungsgemäßen Reinigungsanlage sieht eine weitere Lösung vor, dass die Filtereinrichtung eine Filtertrommel umfasst, welche mit einem Teilbereich ihres Trommelmantels einen Filtertrog bildet.

Eine derartige Filtereinrichtung hat den Vorteil, dass eine Filtertrommel in einfacher Weise dazu eingesetzt werden kann, die sich in dieser absetzende Schmutzfracht aus der Filtertrommel zu entfernen.

Beispielsweise ist dabei vorgesehen, dass die Filtertrommel drehbar gelagert ist.

Bei einer drehbar gelagerten Filtertrommel besteht die Möglichkeit, durch das Drehen derselben die sich in der Filtertrommel ablagernde Schmutzfracht zu entfernen.

Beispielsweise ist es hierbei günstig, wenn die Filtertrommel Mitnahmeelemente für die Schmutzfracht aufweist.

Eine besonders günstige Lösung sieht dabei vor, dass die Mitnahmeelemente so ausgebildet sind, dass sie die Schmutzfracht in Drehrichtung zu einer Abfuhreinrichtung mitnehmen. Vorzugsweise verlaufen die Mitnahmeelemente hierzu schraubenförmig zur Drehachse.

Ferner lässt sich die Filtertrommel vorzugsweise konisch ausbilden, so dass beispielsweise die Mitnahmeelemente schraubenförmig angeordnet werden können und damit die Möglichkeit eröffnen, die Schmutzfracht in Richtung eines Trommelendes zu transportieren.

Eine derartige Abfuhreinrichtung kann in unterschiedlichster Art und Weise ausgebildet und beispielsweise endseitig der Filtertrommel angeordnet sein.

Beispielsweise ist vorteilhafterweise vorgesehen, dass die Abfuhreinrichtung von einem Trommelende in die Filtertrommel hinein reicht.

Dabei könnte die Abfuhreinrichtung so ausgebildet sein, dass sie die Schmutzfracht von dem Trommelmantel ablöst.

Eine andere vorteilhafte Lösung sieht vor, dass die Abfuhreinrichtung so ausgebildet ist, dass sie von dem Trommelmantel aufgrund der Schwerkraft abfallende Schmutzfracht auffängt.

Um ferner die Schmutzfracht möglichst vollständig von dem Trommelmantel abzulösen ist vorzugsweise vorgesehen, dass der Filtertrommel eine Rückspüleinrichtung zugeordnet ist.

Eine derartige Rückspüleinrichtung eröffnet die Möglichkeit, die Schmutzfracht, insbesondere Feinpartikel, die nicht unter Wirkung der Schwerkraft von dem Trommelmantel selbsttätig abfallen, von dem Trommelmantel abzulösen.

Vorzugsweise ist eine derartige Rückspüleinrichtung in einem Teilbereich des Trommelmantels wirksam, der dem den Filtertrog bildenden Teilbereich des Trommelmantels gegenüberliegt.

Die Filtertrommel kann prinzipiell so aufgebaut sein, dass sie ein Grobfilterelement und gleichzeitig ein Feinfilterelement bildet.

In diesem Fall ist ein zusätzliches Feinfilter nicht notwendig.

Besonders günstig ist jedoch eine Lösung, bei welcher die Filtertrommel mit einem Teilbereich ihres Trommelmantels den Grobfiltertrog bildet und der Filtertrommel eine Feinfiltereinheit nachgeordnet ist.

Besonders kompakt lässt sich diese Lösung dann gestalten, wenn die Filtertrommel zwischen einen Feinfiltertrog endseitig abschließenden Dichtscheiben angeordnet ist.

Weitere Merkmale und Vorteile der Erfindung sind Gegenstand der nachfolgenden Beschreibung sowie der zeichnerischen Darstellung einiger Ausführungsbeispiele.

### In der Zeichnung zeigen:

- Fig. 1: einen Schnitt längs Linie 1-1 in Fig. 2 durch ein erstes Ausführungsbeispiel einer erfindungsgemäßen Reinigungsanlage;
- Fig. 2: eine Draufsicht in Richtung des Pfeils A in Fig. 1;
- Fig. 3: eine ausschnittsweise Schnittansicht ähnlich Fig. 1 durch ein zweites Ausführungsbeispiel einer erfindungsgemäßen Reinigungsanlage;
- Fig. 4: eine ausschnittsweise Schnittansicht ähnlich Fig. 1 durch ein drittes Ausführungsbeispiel einer erfindungsgemäßen Reinigungsanlage;
- Fig. 5: eine schematische perspektivische Ansicht eines vierten Ausführungsbeispiels einer erfindungsgemäßen Reinigungsanlage;
- Fig. 6: einen Schnitt längs Linie 6-6 in Fig. 5 und
- Fig. 7: einen Schnitt ähnlich Fig. 6 durch ein fünftes Ausführungsbeispiel einer erfindungsgemäßen Reinigungsanlage.

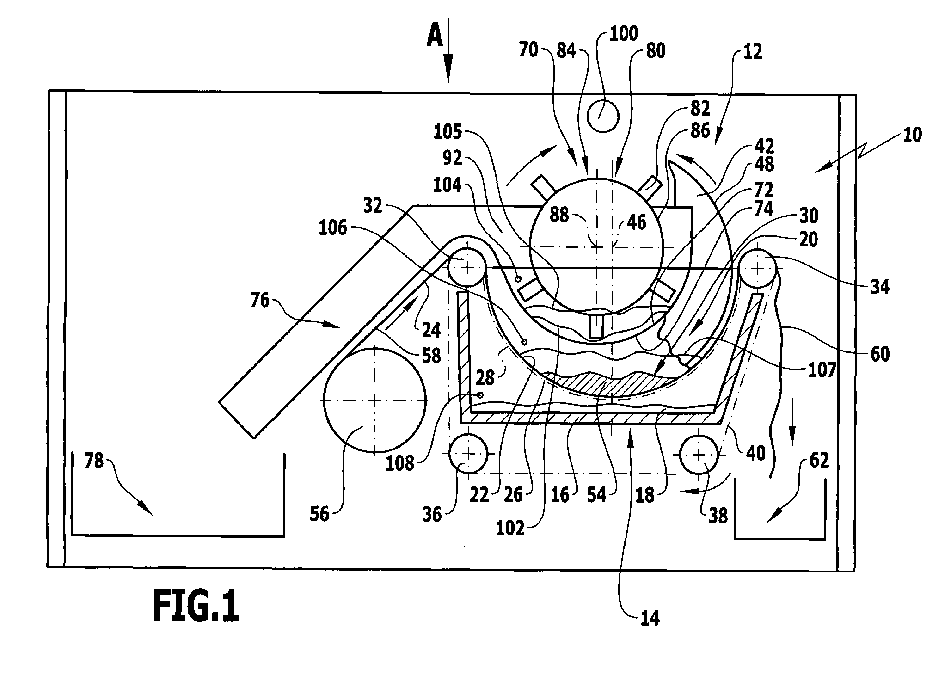

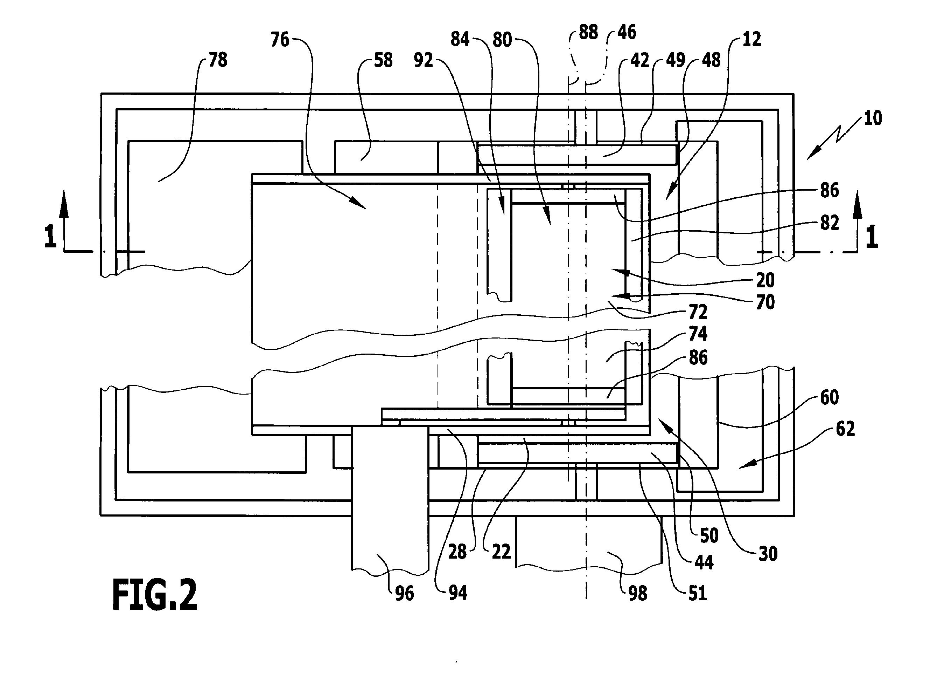

Ein erstes Ausführungsbeispiel einer erfindungsgemäßen Reinigungsanlage, dargestellt in Fig. 1 und 2 umfasst ein Anlagengehäuse 10, in welchem eine als Ganzes mit 12 bezeichnete Filtereinrichtung angeordnet ist.

Die Filtereinrichtung 12 umfasst eine in dem Anlagengehäuse 10 angeordnete Auffangwanne 14, in welcher gefilterter Kühlschmierstoff aufgefangen wird und sich über einem Boden 16 der Auffangwanne 14 in Form eines Kühlschmierstoffbades 18 sammelt, wobei der Kühlschmierstoff aus dem Kühlschmierstoffbad 18 abführbar und wieder einer Werkzeugmaschine zum Kühlen und Schmieren des Bearbeitungsvorgangs zuführbar ist.

In die Auffangwanne 14 hinein ragt eine Feinfiltereinheit 20, mit einem Feinfiltertrog 30, gebildet durch einen trogförmig geführten Abschnitt 22 eines Filterelements, beispielsweise eines Filtervlieses 24, wobei das Filtervlies 24 in dem trogförmigen Abschnitt 22 auf seiner der Auffangwanne 14 zugewandten Seite durch einen Abschnitt 26 eines Stützgurts 28 gestützt ist, wobei der Stützgurt 28 seinerseits als Endlosgurt ausgebildet und durch insgesamt vier Stützgurtwalzen 32, 34, 36, 38 so geführt ist, dass er einerseits den trogförmigen Abschnitt 26 bildet, der in die Auffangwanne 14 hinein ragt und sich dabei trogförmig zwischen der ersten oberen Führungswalze 32 und der zweiten oberen Führungswalze 34 erstreckt, welche im Abstand voneinander angeordnet sind. Ferner bildet der als Endlosgurt ausgebildete Stützgurt 28 einen Rückführabschnitt 40, welcher von der zweiten oberen Führungswalze 34 über die unteren Führungswalzen 38 und 36 zur oberen Führungswalze 32 außerhalb der Auffangwanne 14 verläuft.

Die Form des trogförmigen Abschnitts 26 des Stützgurts 28 wird dabei festgelegt durch Dichtscheiben 42 und 44, welche um eine gemeinsame Achse 46 drehbar sind und an deren Umfangsseiten 48 und 50 sowohl der trogförmige Abschnitt 22 des Filtervlieses 24 als auch der trogförmige Abschnitt 26 des Stützgurts 28 jeweils mit ihren äußeren Rändern anliegen, wobei unmittelbar auf den Umfangsseiten 48 und 50 die äußeren Ränder 49, 51 des trogförmigen Abschnitts 22 des Filtervlieses 24 anliegen und diese werden durch äußere Ränder des Abschnitts 26 des Stützgurts 28 gegen die Umfangsseiten 48 und 50 gedrückt.

Somit bilden die beiden Dichtscheiben 42 und 44 zusammen mit dem trogförmigen Abschnitt 22 des Filtervlieses 24 insgesamt den Feinfiltertrog 30, durch welchen der noch mit Feinpartikeln belastete Kühlschmierstoff seine Feinfilterung erfährt, wobei die Feinpartikel auf ihrer dem Abschnitt 26 des Stützgurts 28 gegenüberliegenden Innenseite 52 einen Filterkuchen 54 bilden.

Der Filterkuchen 54 lässt sich dadurch aus dem Feinfiltertrog 20 entfernen, dass von einer Vorratsrolle 56 ungenutztes Filtervlies 24 abwickelbar und in Form eines Zufuhrabschnitts 58 dem Abschnitt 22 zuführbar ist, wobei im Bereich der oberen Führungswalze 32 der Zufuhrabschnitt 58 zur Anlage auf dem Stützgurt 28 kommt und durch Drehen der Dichtscheiben 42 und 44 und somit Mitbewegen des Stützgurts 28 sich auf dem trogförmigen Abschnitt 26 des Stützgurts 28 aufliegend und an den Umfangsseiten 48 und 50 der Dichtscheiben 42 und 44 anliegend weiterbewegen lässt, so dass den Filterkuchen 54 tragende Filtervlies 24 über die Führungswalze 34 hinwegbewegbar ist und in Form eines Abfuhrabschnitts 60 in einen Aufnahmebehälter 62 hinein bewegbar ist, in welchem das mit dem Filterkuchen 54 belastete Filtervlies 24 gesammelt wird.

Über dem Feinfiltertrog 20, vorzugsweise in diesen hineinragend, ist eine Grobfiltereinheit 70 angeordnet, welche einen Grobfiltertrog 72 umfasst, der beispielsweise durch ein trogförmig ausgebildetes Sieb 74 gebildet ist, welches beispielsweise halbzylinderförmig ausgebildet ist und in den Feinfiltertrog 30 der Feinfiltereinheit 20 hineinragt. Der Grobfiltertrog 72 setzt sich auf einer Seite, beispielsweise im Bereich über der Führungswalze 32, in Form einer Spänerutsche 76 fort, welche zu einem Spänebehälter 78 führt. Zum Entfernen der sich in dem Grobfiltertrog 72 über dem Sieb 74 ansammelnden Späne ist eine als Ganzes mit 80 bezeichnete Spänetransporteinheit vorgesehen, welche auf dem Sieb 74 längs des Grobfiltertrogs 72 von einer Seite zur anderen, in Richtung auf die Spänerutsche 76 bewegbare Förderelemente 82, insbesondere Förderleisten aufweist, die sich auf dem Sieb 74 ablagernden Späne in Richtung der Spänerutsche 76 so weit bewegen, dass diese selbstständig über die Spänerutsche 76 in den Spänebehälter 78 hineingleiten können.

Die Förderelemente 82 sind vorzugsweise Teil einer als Ganzes mit 84 bezeichneten Förderwalze, welche einerseits die als Leisten ausgebildeten Förderelemente 82 und andererseits die Förderelemente 82 tragende Stützscheiben 86 aufweist, die gemeinsam um eine Achse 88 drehbar sind, welche vorzugsweise parallel zur Achse 46, gegebenenfalls im Abstand von dieser verläuft. Die gesamte Förderwalze 84 ist vorzugsweise zwischen den Dichtscheiben 42 und 44 angeordnet und erstreckt sich in Richtung der Achse 46 maximal bis zu den Stützscheiben 42 und 44, vorzugsweise bis zu Seitenwänden 92 und 94 des Grobfiltertrogs 72, die das halbzylinderförmig gebogene Sieb 74 tragen.

Die Förderwalze 84 wird vorzugsweise durch eine als Ganzes mit 96 bezeichnete Antriebseinheit drehbar angetrieben, während ein Antrieb der Dichtscheiben 42 und 44 über eine Antriebseinheit 98 erfolgt, welche nicht nur die Dichtscheiben 42, 44, sondern gegebenenfalls als Endlosgurt ausgebildeten Stützgurt 28 mit antreibt, gegebenenfalls noch durch entsprechenden Antrieb der Führungswalze 32, 34, 36 und 38. Es ist aber auch möglich, eine gemeinsame Antriebseinheit vorzusehen, von welcher der Antrieb für die Förderwalze 84 und der Antrieb der Drehscheiben 42, 44 und dem Stützgurt 28 abgeleitet ist.

Die Zufuhr von Späne als Schmutzfracht tragendem Kühlschmierstoff erfolgt über eine Zufuhreinheit 100, welche beispielsweise so angeordnet ist, dass sie den Späne als Schmutzfracht tragenden Kühlschmierstoff über dem Grobfiltertrog 72, und zwar beispielsweise über der Förderwalze 84, in die Grobfiltereinheit 70 eintreten lässt, so dass der Späne als Schmutzfracht tragende Kühlschmierstoff die Förderwalze 84 durchsetzt und in den Grobfiltertrog 72 eintritt. Alternativ dazu ist es möglich den Späne als Schmutzfracht tragenden Kühlschmierstoff koaxial zur Achse 46, beispielsweise über eine Hohlwelle, und durch eine der Stützscheiben 86 hindurch zuzuführen.

Der Späne als Schmutzfracht tragende Kühlschmierstoff erfährt in dem Grobfiltertrog 72 die erste Grobfilterung, so dass die Späne unmittelbar auf dem Sieb 74 und somit bodenseitig des Grobfiltertrogs 72 als Späneschicht 102 ablagern.

Diese Späneschicht 102 wird nun durch die Förderwalze 84, insbesondere die Förderelemente 82 derselben dadurch aus dem Grobfiltertrog 72 entfernt, dass die Förderelemente 82 die Späne der Späneschicht 102 in Richtung der Spänerutsche 76 und so weit auf diese Bewegen, dass die Späne selbständig über die Spänerutsche 76 in den Spänebehälter 78 abrutschen.

Somit ist ein in Intervallen oder ständig erfolgender Abtransport der Späneschicht 102 mittels der Förderelemente 82 der Förderwalze 84 realisierbar, so dass die Späneschicht 102 nicht ungewollt auf eine ein Hindurchtreten des Kühlschmierstoffs verhindernde Dicke anwachsen kann.

Der durch den Grobfiltertrog 72 hindurchtretende Anteil der Schmutzfracht, insbesondere die Feinpartikel, gelangen nun mit dem Kühlschmierstoff von dem Grobfiltertrog 72 in den Feinfiltertrog 30 der Feinfiltereinheit 20 und setzen sich in dieser als Filterkuchen 54 auf einer der Innenseite des Feinfiltertrogs 30 zugewandten Seite des Abschnitts 22 des Filtervlieses 24 fest. Um den Filterkuchen 54 ebenfalls aus dem Feinfiltertrog 30 zu entfernen, wird - wie bereits beschrieben - das Filtervlies 24 in Intervallen oder kontinuierlich durch die Feinfiltereinheit 20 hindurchbewegt, das heißt, dass der trogförmige Abschnitt 22 des Filtervlieses 24 ständig oder bei Bedarf durch Zufuhr von unbenutztem Filtervlies 24 über den Zufuhrabschnitt 58 erneuert wird, so dass sich in dem Feinfiltertrog 30 der noch Schmutzfracht tragende Kühlschmierstoff nicht in großen Mengen ansammelt, sondern im Wesentlichen die Feinfiltereinheit 20 in Schwerkraftrichtung durchläuft und in die Auffangwanne 14 eintritt, um dort das Kühlschmierstoffbad 18 aus schmutzfrachtfreiem Kühlschmierstoff zu bilden, aus dem dann wiederum Kühlschmierstoff für die Bearbeitung von Werkstücken in einer Werkzeugmaschine entnommen werden kann.

Die Entnahme von Kühlschmierstoff aus der Auffangwanne 14 erfolgt dabei beispielsweise mit einer zeichnerisch nicht dargestellten üblichen Förderpumpe, um den Kühlschmierstoff einem Arbeitsraum der Werkzeugmaschine zuführen zu können.

Eine Überwachung von jeweils zu großen Ansammlungen von schmutzbefrachtetem Kühlschmierstoff sowohl in dem Grobfiltertrog 72 als auch in dem Feinfiltertrog 30 erfolgt vorzugsweise durch entsprechend angeordnete Kühlschmierstoffsensoren 104 und 106, welche den jeweiligen Pegelstand 105 bzw. 107 des Kühlschmierstoffs anzeigen und bei Erreichen eines Maximalpegels werden der Antrieb 96 und/oder der Antrieb 98 eingeschaltet, um durch Entfernen der Späneschicht 102 und/oder des Filterkuchens 54 den Durchtritt des Kühlschmierstoffs zu erleichtern.

Vorzugsweise ist auch noch in der Auffangwanne 14 ein Sensor 108 vorgesehen, der erkennt, wenn der Oberflächenspiegel des Kühlschmierstoffbades 18 einen vorgesehenen Maximalwert überschreitet.

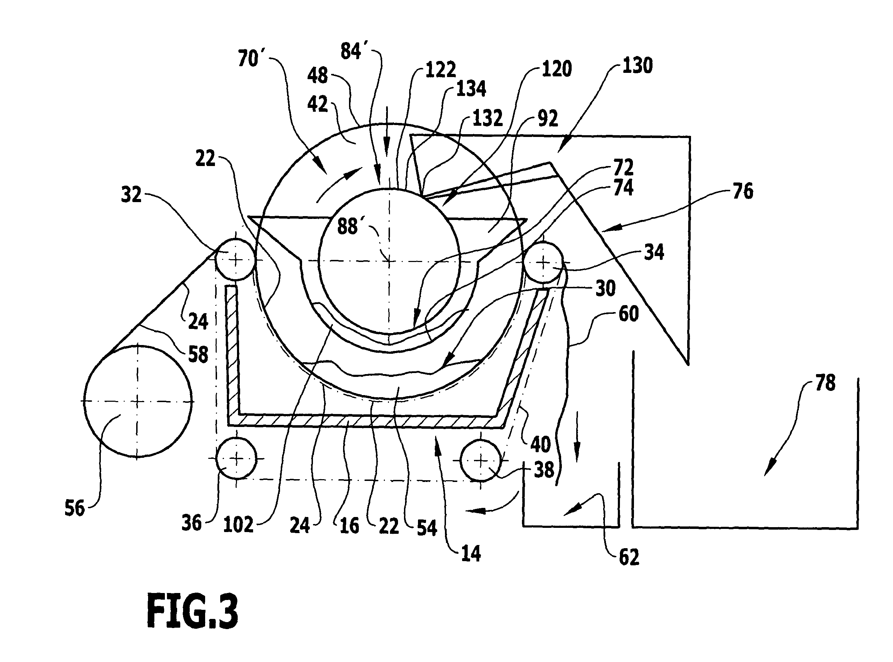

Bei einem zweiten Ausführungsbeispiel einer erfindungsgemäßen Reinigungsanlage, dargestellt in Fig. 3 sind diejenigen Teile, die mit dem ersten Ausführungsbeispiel der erfindungsgemäßen Reinigungsanlage identisch ausgebildet sind, mit denselben Bezugszeichen versehen, so dass auf die Ausführungen zu diesen Teilen im Zusammenhang mit dem ersten Ausführungsbeispiel vollinhaltlich Bezug genommen wird.

Im Gegensatz zum ersten Ausführungsbeispiel ist bei dem zweiten Ausführungsbeispiel die Förderwalze 84' nicht mit mechanischen Förderelementen 82 versehen, sondern als Magnetwalze 120 ausgebildet, auf deren Oberfläche 122 Späne durch magnetische Anziehung haften bleiben.

Die Magnetwalze 120 verläuft dabei mit ihrer Oberfläche 122 in geringem Abstand von dem Sieb 74 und ist somit in der Lage, Späne aus der sich auf dem Sieb 74 bildenden Späneschicht 102 mitzunehmen, die dadurch auf der Oberfläche 122 haften und bei einer Drehung der Magnetwalze 120 um die Achse 88' aus dem Grobfiltertrog 72 herausbewegt werden. Vorzugsweise werden die auf der Oberfläche 122 der Magnetwalze 120 haftenden Späne durch eine als Ganzes mit 130 bezeichnete Abtrageinheit 130 abgetragen, die eine Abtragkante 132 aufweist, die auf der Oberfläche 122 der Magnetwalze 120 aufliegend verläuft und die auf der Oberfläche 122 durch magnetische Anziehung haftenden Späne beispielsweise in einem über dem Grobspänetrog 72 liegenden Umfangsbereich 134 abschabt, so dass die Späne über die nicht magnetische Abtrageinheit 130 hinweg zu einer Spänerutsche 76 gelangen und von dieser in den Spänebehälter 78 rutschen.

Die Abtrageinheit 130 kann dabei, wie in Fig. 3 dargestellt, mit der Abtragkante 132 ständig an der Oberfläche 122 anliegen und somit auch ständig in der Lage sein, von dem Oberflächenbereich 134 abgeschabte Späne der Spänerutsche 76 zuzuführen.

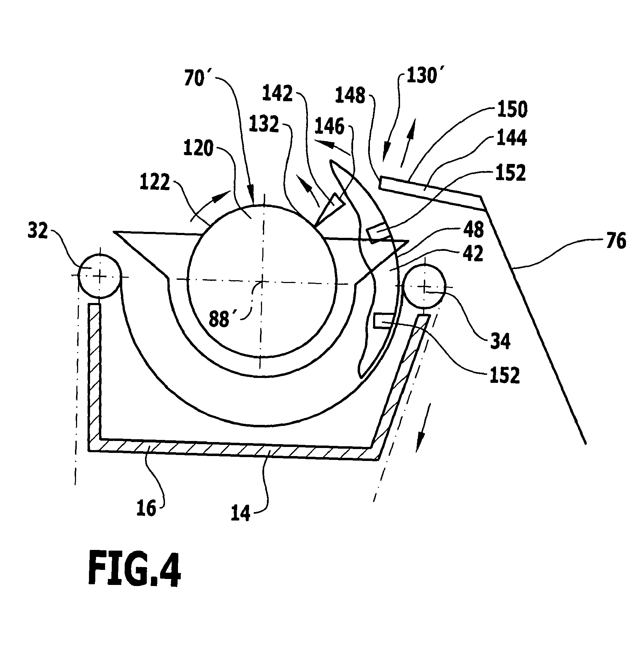

Bei einem in Fig. 4 dargestellten dritten Ausführungsbeispiel, welches eine Abwandlung des zweiten Ausführungsbeispiels darstellt, ist die Abtrageinheit 130' insoweit modifiziert, dass diese zwei Klappenelemente 142 und 144 aufweist, wobei das Klappenelement 142 die Abtragkante 132 trägt und das Klappenelement 144 mit der Spänerutsche 76 verbunden ist.

Die Klappenelemente 142 und 144 können dabei im Bereich von einander zugewandten Kanten 146 und 148 aneinander anliegen, um eine teilbare Abtragrutsche 150 zu bilden, die in die Spänerutsche 76 übergeht, die Klappen 142 und 144 können jedoch so klappen, dass die Kanten 146 und 148 voneinander weg bewegt werden und damit die Möglichkeit eröffnen, beispielsweise die Dichtscheiben 42, 44 miteinander verbindende Stege 152 durch die Abtragrutsche 150 hindurchzubewegen, wobei die Stege 152 einen Transport des Filterkuchens 54 verbessern.

Im Übrigen entspricht das dritte Ausführungsbeispiel dem zweiten Ausführungsbeispiel, so dass hinsichtlich der nicht dargestellten und nicht näher erläuterten Merkmale auf das zweite Ausführungsbeispiel Bezug genommen wird.

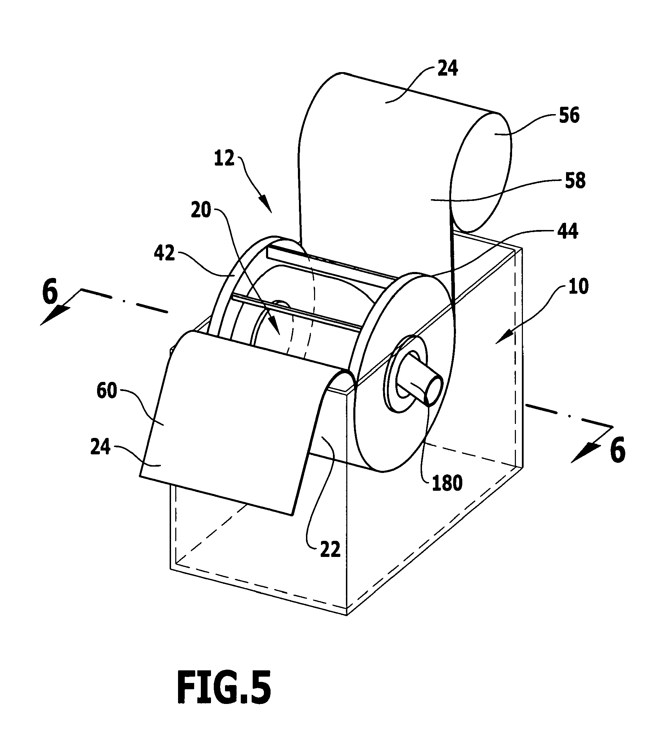

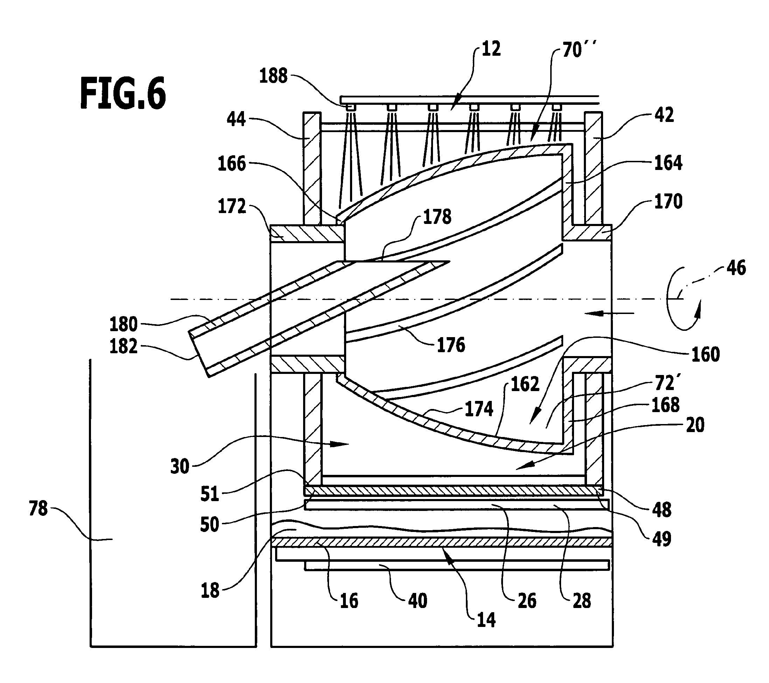

Bei einem vierten Ausführungsbeispiel einer erfindungsgemäßen Reinigungsanlage, dargestellt in Fig. 5 und 6 sind diejenigen Elemente, die mit denen der voranstehend beschriebenen Reinigungsanlagen identisch sind, mit denselben Bezugszeichen versehen, so dass hinsichtlich der Beschreibung derselben vollinhaltlich auf die Ausführungen zu den voranstehenden Ausführungsbeispielen Bezug genommen wird.

Insbesondere umfasst auch das vierte Ausführungsbeispiel der erfindungsgemäßen Reinigungsanlage ein Anlagengehäuse 10, in welchem die Filtereinrichtung 12 angeordnet ist, wobei diese eine Feinfiltereinheit 20 umfasst, die in gleicher Weise wie bei den voranstehend beschriebenen Ausführungsbeispielen zwei Dichtscheiben 42, 44 aufweist, welche das Filtervlies 24 zur Ausbildung des Feinfiltertrogs 30 mit einem trogförmigen Abschnitt führen, wobei zum Abstützen des Filtervlieses den Abschnitt 26 des Stützgurts 28 dient, der die äußeren Ränder 49, 51 des trogförmigen Abschnitts 22 des Filtervlieses 24 gegen die Umfangsseiten 48, 50 der Dichtscheiben 42, 44 mit Druck anlegt, um einen dichten Abschluss zwischen den Rändern 49, 51 des trogförmigen Abschnitts 22 des Filtervlieses 24 und den Dichtscheiben 42, 44 zu erreichen.

Insbesondere funktioniert die Feinfiltereinheit 20 vom Prinzip her in gleicher Weise wie im Zusammenhang mit den voranstehenden Ausführungsbeispielen beschrieben.

Die Grobfiltereinheit 70" ist im Gegensatz zu den voranstehenden Ausführungsbeispielen nicht mit einem Grobfiltertrog versehen, sondern mit einer als Ganzes mit 160 bezeichneten Filtertrommel, die beispielsweise koaxial zu der Achse 46 angeordnet ist, um welche die Dichtscheiben 42, 44 drehbar sind und die einen Trommelmantel 162 aufweist, welcher sich in Richtung der Achse 46 zwischen zwei in Richtung der Achse 46 im Abstand voneinander angeordneten Trommelenden 164, 166 erstreckt, die in Richtung der Achse im Abstand voneinander angeordnet sind.

Beispielsweise ist das Trommelende 164 durch eine scheibenförmige Wand 168 gebildet, welche ihrerseits auf einer drehbar gelagerten Hülse 170 sitzt und sich radial zu dieser erstreckt, wobei die Hülse 170 die Dichtscheibe 42 durchsetzt und somit durch die Dichtscheibe 42 hindurchgeführt ist.

Beispielsweise besteht die Möglichkeit, die Dichtscheibe 42 drehbar an der Hülse 170 zu lagern.

Das Trommelende 166 wird ebenfalls gebildet durch eine Hülse 172, welche die Dichtscheibe 44 durchsetzt und ebenfalls vorzugsweise die Dichtscheibe 44 drehbar relativ zur Hülse 172 lagert.

Ferner verläuft der Trommelmantel 162 ausgehend von einer Außenseite der scheibenförmigen Wand 168 mit sich in Richtung der Achse 46 zunehmend verringerndem Radius bis zur Hülse 172, so dass ein Durchmesser des Trommelmantels 162 im Bereich des Trommelendes 166 minimal ist, während ein Durchmesser des Trommelmantels im Bereich des Trommelendes 164 maximal ist.

Vorzugsweise ist dabei der Trommelmantel 162 als Sieb ausgebildet und mit Durchbrüchen versehen, so dass dieser mit einem in Schwerkraftrichtung untenliegenden Teilbereich einen Grobfiltertrog 72' bildet, und folglich beispielsweise durch die Hülse 170 zugeführter Kühlschmierstoff mit Schmutzfracht in der Filtertrommel 160 zumindest grob gefiltert wird, so dass sich auf einer Innenseite 174 des Trommelmantels 162 aus dem mit Schmutzfracht versehenen Kühlschmierstoff ausgefilterte Späne, insbesondere Grobspäne sammeln, die durch die Öffnungen des Trommelmantels 162 nicht hindurchtreten können.

Um diese Grobspäne nunmehr aus der Filtertrommel 160 zu entfernen, sind an der Innenseite 174 des Trommelmantels 162 schraubenförmige Förderleisten 176 vorgesehen, welche in einem in Schwerkraftrichtung unten liegenden Bereich des Trommelmantels 162 sich sammelnde Späne beim Rotieren der Filtertrommel 160 nach oben fördern und gleichzeitig in Richtung des Trommelendes 166 bewegen, so dass diese Grobspäne bei sich drehender Filtertrommel 160 in eine Abfuhröffnung 178 fallen können, in dem sie sich von der Innenseite 174 des Trommelmantels 162 aufgrund der Einwirkung der Schwerkraft lösen. Das Abfuhrrohr 180 durchsetzt dabei die Hülse 172 und verläuft ausgehend von der Abfuhröffnung 178 in Schwerkraftrichtung fallend, so dass die über die Abfuhröffnung 178 in das Abfuhrrohr 180 eintretenden Grobspäne in dem Abfuhrrohr 168 in Richtung von dessen Austrittsöffnung 182 rutschen, die über dem Spänebehälter 78 angeordnet ist und die Grobspäne sammelt.

Um die Filtertrommel 160 noch besser reinigen zu können, sind außerhalb des Grobfiltertrogs 72' Rückspüldüsen 188 vorgesehen, die mit Kühlschmierstoff den Trommelmantel 162 von Außen bespritzen.

Der den Trommelmantel 162 durchsetzende, schmutzfrachtbeladene Kühlschmierstoff tritt dann in den Feinfiltertrog 30 ein und wird in diesem gefiltert, so dass lediglich gefilterter Kühlschmierstoff den trogförmigen Abschnitt 22 des Filtervlieses 24 durchsetzt und in der Auffangwanne 14 als Kühlschmierstoffbad 18 gesammelt wird, aus welchem dann der Kühlschmierstoff abgeführt und zur weiteren Verwendung in der Werkzeugmaschine gepumpt wird.

Auch bei dem vierten Ausführungsbeispiel ist bei der Feinfiltereinheit 20 dasFilterelement 24 durch den Feinfiltertrog 30 hindurchbewegbar und hierzu ein Antrieb entsprechend dem ersten Ausführungsbeispiel vorgesehen.

Ferner ist die Filtertrommel 160 ebenfalls angetrieben und vorzugsweise durch einen eigenen Antrieb unabhängig von dem Antrieb für das Filterelement 24 antreibbar.

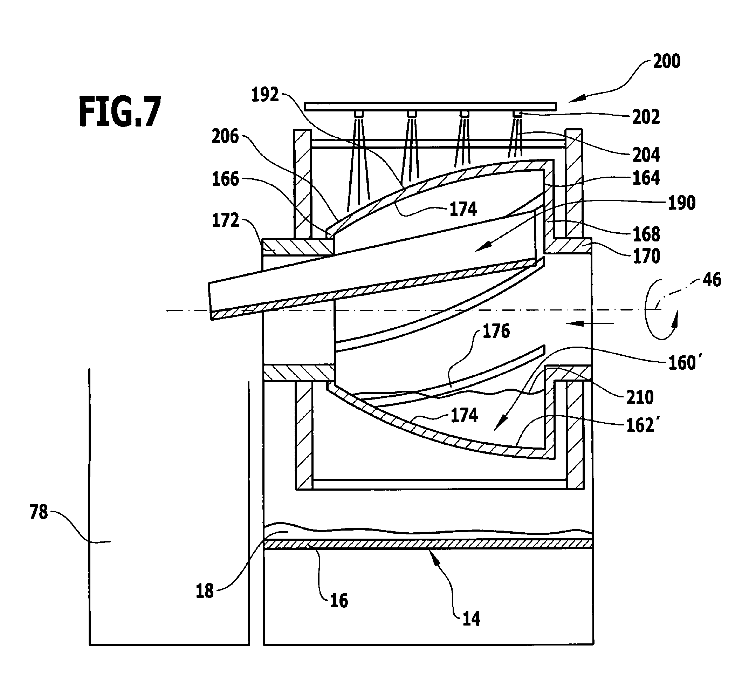

Bei einem fünften Ausführungsbeispiel einer erfindungsgemäßen Reinigungsanlage, dargestellt in Fig. 7, ist die Filtertrommel 160' insoweit modifiziert, als der Trommelmantel 162' kleine Öffnungen aufweist, dass dieser sowohl Grobspäne als auch zumindest zum Teil Feinspäne ausfiltert, so dass vom Grundprinzip her die Filtertrommel 160' sowohl die Funktion des Grobfilters als auch des Feinfilters übernimmt.

In einem derartigen Fall besteht allerdings das Problem, dass sich zumindest teilweise die Feinpartikel nicht selbstständig von der Innenseite 174 des Trommelmantels 162' lösen, da die Schwerkraftwirkung hierzu nicht ausreichend ist.

Aus diesem Grund erstreckt sich beispielsweise durch die Hülse 172 ein als Ganzes mit 190 bezeichneter Abfuhrtrog ins Innere der Filtertrommel 160, wobei der Abfuhrtrog sich beispielsweise von der Hülse 172 bis zur scheibenförmigen Wand 168 erstreckt und in horizontaler Richtung eine derartige Breite aufweist, dass der Abfuhrtrog 190 sich nahezu bis zu den Förderleisten 176 ausdehnt, so dass ein möglichst großer Umfangsabschnitt 192 des bezogen auf die Schwerkraftrichtung obenliegenden Trommelmantels 162 über dem Abfuhrtrog 190 angeordnet ist.

Von diesem oben liegenden Umfangsabschnitt 192 des Trommelmantels 162' lösen sich die Grobspäne und gegebenenfalls teilweise Feinspäne und/oder teilweise Filterkuchen selbsttätig ab und fallen in Abfuhrtrog 190.

Zum umfassenden Ablösen der feinen Späne und/oder Feinpartikel und/oder eines sich ausbildenden Filterkuchens ist eine Rückspüleinrichtung 200 vorgesehen, die in Richtung der Achse 46, um welche sich die Filtertrommel 160 dreht, aufeinanderfolgend angeordnete Düsen 202 aufweist, von denen Sprühstrahlen 204 auf eine Außenseite 206 des obenliegenden Umfangsabschnitts 192 des Trommelmantels 162 auftreffen und in diesem Umfangsabschnitt 192 des Trommelmantels 162 eine Rückspülung desselben vornehmen, so dass die auf der Innenseite 174 haftenden Feinpartikel durch dieses Rückspülen abgelöst werden und mit dem Rückspülstrom mitgerissen und im Abfuhrtrog 190 gesammelt werden, der dann den zur Rückspülung verwendeten Kühlschmierstoff mitsamt Feinpartikeln und Grobpartikeln dem Spänebehälter 78 zuführt, wobei im Spänebehälter 78 Grobpartikel, Feinpartikel und Kühlschmierstoff vorliegen, so dass beim Rückspülen der Kühlschmierstoff zumindest zum Teil abgeführt und ebenfalls von der erfindungsgemäßen Reinigungsanlage nochmals gereinigt werden kann, bevor dieser wiederum für Kühl- und Schmieraufgaben in der Werkzeugmaschine eingesetzt wird.

Da die Ausbildung eines Filterkuchens zunächst die Filterwirkung verbessert, wird über Zeitintervalle ein Filterkuchen aufgebaut, so lange, bis sich in der Filtertrommel 160' flüssiger Kühlschmierstoff in nennenswertem Umfang zum Beispiel bis zu einem Pegelstand 210 ansammelt. In diesem Fall wird dann die Rückspüleinrichtung 190 für einen Rückspülzeitraum eingesetzt.

Auch bei diesem fünften Ausführungsbeispiel ist, in gleicher Weise wie beim voranstehenden Ausführungsbeispiel in Schwerkraftrichtung unterhalb der Filtertrommel 160 die Auffangwanne 14 vorgesehen, auf deren Boden 16 sich dann der Kühlschmierstoff in Form des Kühlschmierstoffbades 18 sammelt.

Bei der einfachsten Ausführungsform des fünften Ausführungsbeispiels kann auch die Feinfiltereinheit 20 mit dem Filtervlies 24 entfallen, wenn die Filterwirkung des Trommelmantels 162' ausreichend gut ist.

Bei einer verbesserten Ausführungsform des fünften Ausführungsbeispiels ist jedoch nach wie vor die Feinfiltereinheit 20 gemäß dem voranstehend beschriebenen Ausführungsbeispiel vorhanden, so dass diesbezüglich auf die Ausführungen zum voranstehenden Ausführungsbeispiel Bezug genommen werden kann.

## Patentansprüche

1. Reinigungsanlage für Kühlschmierstoff von Werkzeugmaschinen umfassend ein Anlagengehäuse (10), eine in dem Anlagengehäuse (10) angeordnete Filtereinrichtung (12), welcher Kühlschmierstoff über ein Zuführelement (100) zuführbar ist, und eine Auffangwanne (14), in welcher der durch die Filtereinrichtung (12) hindurchgetretene und **dadurch** gefilterte Kühlschmierstoff aufgefangen wird,
**dadurch gekennzeichnet, dass** die Filtereinrichtung (12) eine Feinfiltereinheit (20) umfasst, welche ein einen Feinfiltertrog (30) bildendes Filterelement (24) aufweist, das durch den Feinfiltertrog (30) hindurchbewegbar ist und dass der Feinfiltereinheit (20) eine Grobfiltereinheit (70) vorgeschaltet ist, welche Späne auffängt und aus welcher die Späne mit einer Spänetransporteinheit (80) abführbar sind.

2. Reinigungsanlage nach Anspruch 1, **dadurch gekennzeichnet, dass** die Grobfiltereinheit (70) einen Grobfiltertrog (72) aufweist, der insbesondere in Schwerkraftrichtung über dem Feinfiltertrog (30) angeordnet ist.

3. Reinigungsanlage nach Anspruch 2, **dadurch gekennzeichnet, dass** der Grobfiltertrog (72) sich in den Feinfiltertrog (30) hineinerstreckt.

4. Reinigungsanlage nach einem der voranstehenden Ansprüche, **dadurch gekennzeichnet, dass** die Grobfiltereinheit (70) ein feststehendes Filterelement (74) umfasst, welches den Grobfiltertrog (72) bildet und dass insbesondere dem feststehenden Filterelement (74) die Spänetransporteinheit (80, 80') zugeordnet ist, welche auf dem Grobfilterelement (74) aufliegende Späne zu einem Spänebehälter (78) fördert.

5. Reinigungsanlage nach einem der voranstehenden Ansprüche, **dadurch gekennzeichnet, dass** die Spänetransporteinheit (80) die Späne von dem Filterelement (74) mechanisch abträgt.

6. Reinigungsanlage nach einem der voranstehenden Ansprüche, **dadurch gekennzeichnet, dass** die Spänetransporteinheit (80') die Späne von dem Filterelement (74) durch ein Magnetfeld aufnimmt und abträgt.

7. Reinigungsanlage nach dem Oberbegriff des Anspruchs 1 oder nach einem der voranstehenden Ansprüche, **dadurch gekennzeichnet, dass** die Feinfiltereinrichtung (12) eine Filtertrommel (160) umfasst, welche mit einem Teilbereich ihres Trommelmantels (162) einen Filtertrog bildet.

8. Reinigungsanlage nach Anspruch 7, **dadurch gekennzeichnet, dass** die Filtertrommel (160) drehbar gelagert ist.

9. Reinigungsanlage nach Anspruch 7 oder 8, **dadurch gekennzeichnet, dass** die Filtertrommel (160) Mitnahmeelemente (176) für Schmutzfracht aufweist.

10. Reinigungsanlage nach Anspruch 9, **dadurch gekennzeichnet, dass** die Mitnahmeelemente (176) so ausgebildet sind, dass sie Schmutzfracht in Drehrichtung zu einer Abfuhreinrichtung mitnehmen.

11. Reinigungsanlage nach einem der voranstehenden Ansprüche, **dadurch gekennzeichnet, dass** die Abfuhreinrichtung (180, 190) von einem Trommelende (166) in die Filtertrommel (160) hineinreicht.

12. Reinigungsanlage nach einem der Ansprüche 7 bis 11, **dadurch gekennzeichnet, dass** der Filtertrommel (160) eine Rückspüleinrichtung (200) zugeordnet ist.

13. Reinigungsanlage nach Anspruch 12, **dadurch gekennzeichnet, dass** die Rückspüleinrichtung (200) in einem Teilbereich des Trommelmantels (162) wirksam ist, der dem den Filtertrog (72') bildenden Teilbereich gegenüberliegt.

14. Reinigungsanlage nach einem der Ansprüche 7 bis 13, **dadurch gekennzeichnet, dass** die Filtertrommel (160) mit dem Teilbereich ihres Trommelmantels (162) den Grobfiltertrog (72') für Späne bildet und dass der Filtertrommel (160) eine Feinfiltereinheit (20) nachgeordnet ist.

15. Reinigungsanlage nach Anspruch 14, **dadurch gekennzeichnet, dass** die Filtertrommel (160) zwischen einem Feinfiltertrog (30) endseitig abschließenden Dichtscheiben (42, 44) angeordnet ist.
